# EUROPÄISCHE PATENTSCHRIFT

(11) **EP 3 880 548 B1**
(45) Veröffentlichungstag und Bekanntmachung des Hinweises auf die Patenterteilung: **23.11.2022**
(21) Anmeldenummer: 19794978.7
(22) Anmeldetag: 24.10.2019
(51) Int. Cl.: B62J 6/02, B60Q 1/12

(54) **SCHEINWERFER FÜR EIN MOTORRAD**
HEADLIGHT FOR A MOTORCYCLE
PHARE POUR UNE MOTOCYCLETTE

(30) Priorität: 14.11.2018 DE 102018128493
(43) Veröffentlichungstag der Anmeldung: 22.09.2021
(73) Patentinhaber: Bayerische Motoren Werke Aktiengesellschaft, 80809 München (DE)
(72) Erfinder: RAU, Steffen, 85107 Baar-Ebenhausen (DE)
(86) Internationale Anmeldenummer: PCT/EP2019/079074
(87) Internationale Veröffentlichungsnummer: WO 2020/099094

(56) Entgegenhaltungen:
- DE-A1- 2 415 783
- DE-A1- 3 743 137
- KR-A- 20120 035 644

## Beschreibung

Die Erfindung betrifft einen Scheinwerfer für ein Motorrad gemäß dem Oberbegriff des Patentanspruchs 1.

Bei Motorradscheinwerfern erweist es sich als nachteilhaft, dass bei einer Schräglage des Motorrads, wie z.B. bei Kurvenfahrten, die durch den Scheinwerfer generierte Lichtverteilung geneigt wird, was zu einer schlechten Ausleuchtung des Fahrbahnrands führt.

Um die Neigung der Lichtverteilung eines Motorradscheinwerfers zu kompensieren, sind aus dem Stand der Technik Motorradscheinwerfer bekannt, welche über die Bewegung eines zusätzlich im Scheinwerfer verbauten Spiegels die Lichtverteilung des Scheinwerfers verschwenken. Durch die Verschwenkung der Lichtverteilung entgegengesetzt zu der Neigung des Motorrads kann ein sog. Rollwinkelausgleich erreicht werden, so dass der durch die Lichtverteilung ausgeleuchtete Bereich vor dem Motorrad und insbesondere der Verlauf einer Hell-Dunkel-Grenze im Wesentlichen unveränderlich bleibt. Nichtsdestotrotz benötigen solche Scheinwerfer aufgrund des zusätzlich verbauten Spiegels mehr Bauraum, oder es müssen kleinere Optiken zur Generierung der Lichtverteilung verwendet werden.

Das Dokument DE 10 2013 216 584 A1 zeigt einen Scheinwerfer für ein Motorrad, der einen Rollwinkelausgleich über eine Gestängeanordnung ermöglicht, die ein Projektionsmodul relativ zum Scheinwerfergehäuse dreht.

Die Druckschrift KR 2012 0035644 A zeigt einen Motorradscheinwerfer gemäß dem Oberbegriff des Anspruchs 1.

Aufgabe der Erfindung ist es, einen Motorradscheinwerfer mit verschwenkbarer Lichtverteilung basierend auf einer einfachen und kompakten Mechanik zu schaffen.

Diese Aufgabe wird durch den Scheinwerfer gemäß Patentanspruch 1 gelöst. Weiterbildungen der Erfindung sind in den abhängigen Ansprüchen definiert.

Sofern im Folgenden und insbesondere in den Patentansprüchen Wechselwirkungen zwischen dem Scheinwerfer und dem Motorrad beschrieben werden, so ist dies immer dahingehend zu verstehen, dass die Wechselwirkung bei Anordnung bzw. Einbau des Scheinwerfers im Motorrad auftritt. Die Komponenten des Scheinwerfers, die eine entsprechende Wechselwirkung mit dem Motorrad bzw. Bauteilen des Motorrads haben, sind somit derart ausgestaltet, dass die Wechselwirkung bei Anordnung bzw. Einbau des Scheinwerfers im Motorrad hervorgerufen wird.

Der erfindungsgemäße Motorradscheinwerfer umfasst eine Leuchteinheit mit einem Leuchtmittel und einer optischen Einrichtung, um mittels der optischen Einrichtung aus dem Licht des Leuchtmittels eine vorgegebene Lichtverteilung vor dem Motorrad zu generieren. Die Leuchteinheit ist an einem Tragrahmen befestigt und relativ zu dem Tragrahmen derart drehbar, dass durch die Drehung der Leuchteinheit die Verschwenkung der vorgegebenen Lichtverteilung in einer Ebene bewirkt wird, welche im Wesentlichen senkrecht zur Fahrtrichtung des Motorrads verläuft. Darüber hinaus beinhaltet der erfindungsgemäße Scheinwerfer einen elektromechanischen Aktor, wie z.B. einen Elektromotor, um die Drehung der Leuchteinheit zur Verschwenkung der vorgegebenen Lichtverteilung zu bewirken. Der erfindungsgemäße Scheinwerfer ermöglicht somit den Ausgleich eines Rollwinkels mittels eines elektromechanischen Aktors, der eine Drehung der Leuchteinheit bewirkt.

Im erfindungsgemäße Scheinwerfer umfasst der elektromechanische Aktor eine Zahnstange, welche durch Aktivierung des Aktors verschiebbar ist, wobei die Zahnstange in ein Zahnradsegment der Leuchteinheit eingreift, so dass die Verschiebung der Zahnstange die Drehung der Leuchteinheit zur Verschwenkung der vorgegebenen Lichtverteilung bewirkt. Der Begriff des Zahnradsegments ist dabei weit zu verstehen. Ein Zahnradsegment kann lediglich einen Abschnitt eines Zahnrads, jedoch gegebenenfalls auch ein ganzes Zahnrad umfassen.

Der erfindungsgemäße Scheinwerfer weist den Vorteil auf, dass durch eine einfache Mechanik über Zahnstange und Zahnradsegment die Umsetzung einer translatorischen Bewegung in eine Drehbewegung erreicht wird. Hierdurch wird auf einfache Weise ein Rollwinkelausgleich bei gleichzeitig kompakter Bauweise des Scheinwerfers ermöglicht.

Für einen automatischen Rollwinkelausgleich während der Fahrt des Motorrads ist in einer bevorzugten Ausführungsform der elektromechanische Aktor über eine Steuereinrichtung derart ansteuerbar, dass der elektromechanische Aktor bei einer Schräglage des Motorrads während der Fahrt die Leuchteinheit entgegengesetzt zur Richtung der Schräglage verdreht.

In einer weiteren bevorzugten Ausgestaltung des erfindungsgemäßen Scheinwerfers ist die Leuchteinheit mittels eines Lagers, vorzugsweise eines Kugel- und/oder Wälzlagers, drehbar im Tragrahmen gelagert. Hierdurch wird eine Verdrehung der Leuchteinheit im Tragrahmen mit geringem Reibwiderstand ermöglicht.

In einer weiteren bevorzugten Ausgestaltung weist die Leuchteinheit einen Kühlkörper auf, auf dem das Leuchtmittel angeordnet ist, um durch den Kühlkörper gekühlt zu werden. Der Kühlkörper ist dabei starr mit einem Zahnradbauteil verbunden, welches das Zahnradsegment aufweist. Alternativ ist das Zahnradsegment integral mit dem Kühlkörper ausgebildet. In dieser Ausführungsform wird auf einfache Weise die Funktion der Kühlung des Leuchtmittels mit der Anbringung eines Zahnradsegments kombiniert.

In einer weiteren bevorzugten Variante des erfindungsgemäßen Scheinwerfers ist der elektromechanische Aktor benachbart zu einem Bauteil angeordnet, welches ein Widerlager aufweist, das die Zahnstange des elektromechanischen Aktors gegen das Zahnradsegment drückt. Hierdurch wird ein zuverlässiges Eingreifen der Zähne der Zahnstange in die Zähne des Zahnradsegments gewährleistet.

In einer bevorzugten Ausgestaltung der soeben beschriebenen Ausführungsform ist das Bauteil, welches das Widerlager aufweist, starr mit dem Tragrahmen verbunden und hält die Leuchteinheit im Tragrahmen.

Die optische Einrichtung der im erfindungsgemäßen Scheinwerfer verbauten Leuchteinheit kann unterschiedlich ausgestaltet sein. In einer bevorzugten Variante umfasst die optische Einrichtung einen Reflektor. Alternativ oder zusätzlich kann die optische Einrichtung auch eine Linse beinhalten, mit der die vorgegebene Lichtverteilung vor das Motorrad projiziert wird. Vorzugsweise ist der Reflektor jedoch ein Freiformreflektor, der durch Reflexion des Lichts des Leuchtmittels direkt ohne Linse die vorgegebene Lichtverteilung vor dem Motorrad generiert.

Das Leuchtmittel der Leuchteinheit kann je nach Variante des erfindungsgemäßen Scheinwerfers unterschiedlich ausgestaltet sein. Vorzugsweise umfasst das Leuchtmittel eine oder mehrere LEDs und/oder Laserdioden. LEDs und Laserdioden ermöglichen eine energieeffiziente Generierung der Lichtverteilung mit hoher Helligkeit.

In einer Variante der Erfindung ist die Leuchteinheit zur Generierung einer Abblendlichtverteilung ausgebildet. Gegebenenfalls kann die Leuchteinheit auch die Generierung einer Fernlichtverteilung übernehmen. Vorzugsweise sind jedoch an dem Tragrahmen eine oder mehrere weitere Leuchteinheiten zur Generierung der Fernlichtverteilung angeordnet.

In einer weiteren Ausgestaltung umfasst der erfindungsgemäße Scheinwerfer ein Gehäuse, an dem der Tragrahmen derart befestigt ist, dass er gegenüber dem Gehäuse um eine Kippachse verkippbar ist, welche bei aufrechter Position des Motorrads im Wesentlichen horizontal und senkrecht zur Längsachse des Motorrads verläuft. Dabei ist ein weiterer elektromechanischer Aktor zur Verkippung des Tragrahmens vorgesehen, um eine Höhenverstellung der vorgegebenen Lichtverteilung zu bewirken. Diese Variante der Erfindung ermöglicht somit einen Nickwinkelausgleich über einen verkippbaren Tragrahmen in Kombination mit einem elektromechanischen Aktor.

In einer bevorzugten Variante der soeben beschriebenen Ausführungsform ist der weitere elektromechanische Aktor starr am Gehäuse befestigt, wobei eine verschiebbare Betätigungsstange des weiteren elektromechanischen Aktors mit dem Tragrahmen wechselwirkt, um die Verkippung des Tragrahmens zu bewirken. Hierdurch wird mittels einer einfachen Mechanik ein Nickwinkelausgleich ermöglicht.

Neben dem oben beschriebenen Scheinwerfer betrifft die Erfindung ein Motorrad, welches den erfindungsgemäßen Scheinwerfer bzw. eine oder mehrere Varianten des erfindungsgemäßen Scheinwerfers umfasst.

Ein Ausführungsbeispiel der Erfindung wird nachfolgend anhand der beigefügten Figuren detailliert beschrieben.

Es zeigen:
- Fig. 1: eine Ansicht von vorne, welche eine Ausführungsform eines erfindungsgemäßen Motorradscheinwerfers zeigt;
- Fig. 2: eine geschnittene perspektivische Detailansicht der in dem Scheinwerfer der Fig. 1 verbauten Leuchteinheit;
- Fig. 3: eine Draufsicht von hinten auf die Leuchteinheit des Scheinwerfers der Fig. 1;
- Fig. 4: eine geschnittene perspektivische Detailansicht im Bereich des aus Fig. 3 ersichtlichen Eingriffs der Zahnstange in das Zahnradsegment; und
- Fig. 5: eine geschnittene perspektivische Ansicht, die den Aktor im rechten Teil der Fig. 3 wiedergibt.

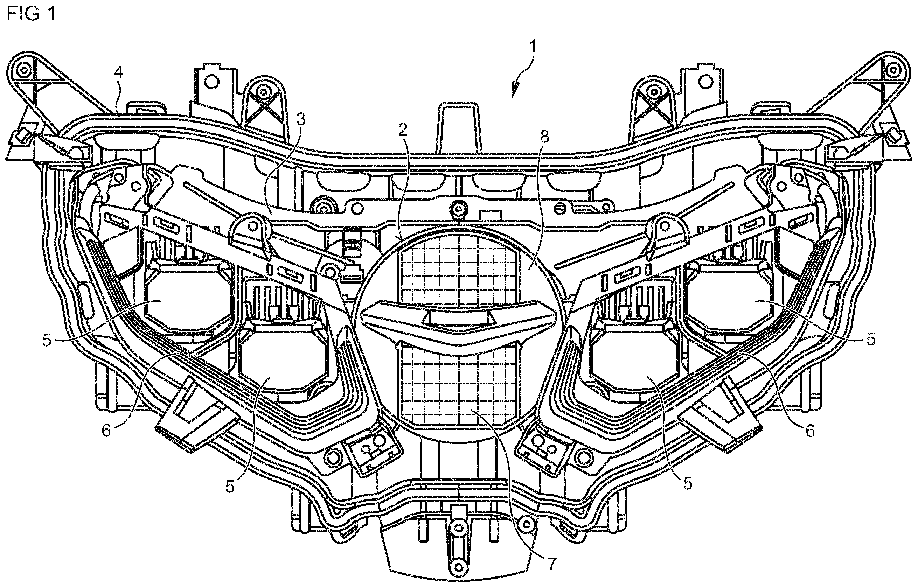

Im Folgenden wird eine Ausführungsform eines erfindungsgemäßen Motorradscheinwerfers anhand von Fig. 1 bis Fig. 5 beschrieben, wobei nur die für die Erfindung relevanten Bauteile erläutert werden und in den Abbildungen mit Bezugszeichen versehen sind.

Fig. 1 zeigt in einer perspektivischen Gesamtansicht von vorne den Aufbau einer Variante eines erfindungsgemäßen Motorradscheinwerfers, der mit Bezugszeichen 1 bezeichnet ist. Der Motorradscheinwerfer umfasst im mittleren Bereich einer Leuchteinheit 2, welche zur Erzeugung einer Abblendlichtverteilung dient. Die Leuchteinheit 2 ist drehbar in einem Tragrahmen 3 aufgenommen, dessen Rückseite durch ein Gehäuse 4 abgedeckt ist. Die Leuchteinheit 2 ist durch diejenigen Bauteile definiert, welche gegenüber dem Tragrahmen drehbar sind.

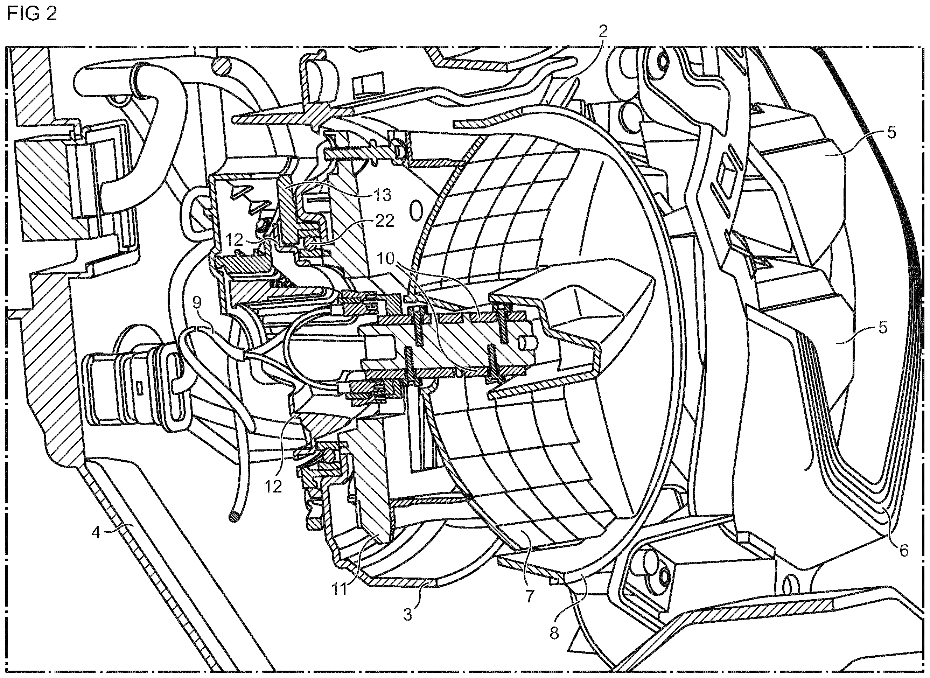

Die Leuchteinheit 2 umfasst einen Freiformreflektor 7, auf dem eine Blende 8 angeordnet ist. Die Blende umfasst einen horizontalen Abschnitt, hinter dem sich auf einem Kühlkörper ein Leuchtmittel aus mehreren LEDs befindet, wie weiter unten anhand von Fig. 2 näher beschrieben wird. Die Blende ist auf der Rückseite offen, so dass das Licht der LEDs auf den Freiformreflektor 7 fällt und durch diesen derart abgelenkt wird, dass eine Abblendlichtverteilung mit einer vorgegebenen Hell-Dunkel-Grenze vor dem Motorrad generiert wird. In der hier beschriebenen Ausführungsform übernimmt die Leuchteinheit 2 die Generierung des Abblendlichts. Zur Erzeugung des Fernlichts werden zusätzlich die Leuchtmodule 5 angeschaltet, wobei sich ein Paar dieser Leuchtmodule links und ein Paar dieser Leuchtmodule rechts von der mittleren Leuchteinheit 2 befinden.

Der Motorradscheinwerfer 1 beinhaltet ferner ein Tagfahrlicht in der Form von zwei Lichtwellenleitern 6, wobei ein Lichtwellenleiter links und der andere Lichtwellenleiter rechts von der mittleren Leuchteinheit 2 angeordnet sind. Die für das Fernlicht verwendeten Leuchtmodule 5 sowie das Tagfahrlicht 6 sind starr an dem Tragrahmen befestigt, d.h. sie können sich nicht relativ zu dem Tragrahmen drehen, wie dies bei der Leuchteinheit 2 der Fall ist.

Der detaillierte Aufbau der Leuchteinheit 2 ist aus der perspektivischen geschnittenen Ansicht der Fig. 2 ersichtlich. Die Abbildung wurde dabei entlang einer vertikalen Ebene geschnitten, die im Wesentlichen mittig durch den Reflektor 7 verläuft. Aus Fig. 2 wird ersichtlich, dass die Blende 8 auf der Rückseite geöffnet ist. In dem geöffneten Bereich ist das vordere Ende eines Kühlkörpers 11 eingeschoben, auf dessen Oberseite und Unterseite sich jeweils eine Platine 10 mit darauf angeordneten LEDs befindet. Die Blende 8 verhindert dabei, dass ein Benutzer direkt die LEDs einsehen kann. Die LEDs werden über ein Kabel 9 mit Strom versorgt.

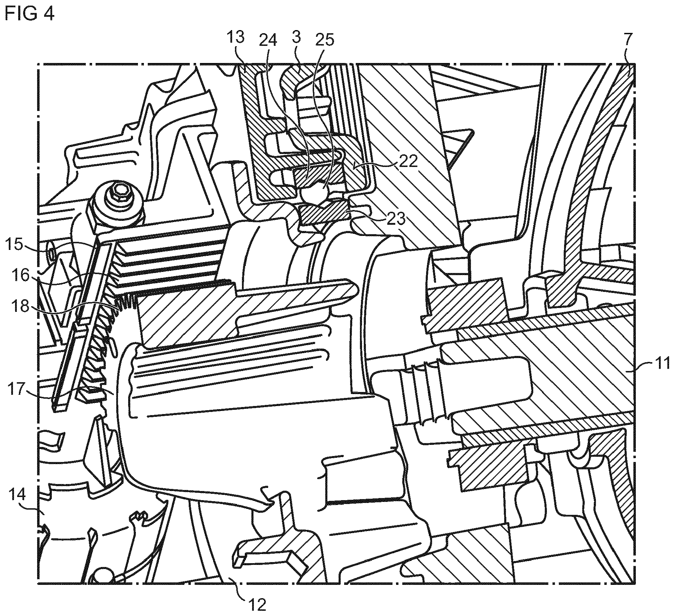

Der Kühlkörper 11 dient dazu, die im Betrieb der LEDs entstehende Wärme abzuführen. Er besteht aus einem flachen Abschnitt, auf dem sich auf der Oberseite und der Unterseite die Platinen 10 befinden sowie einem runden Abschnitt, der am hinteren Ende des flachen Abschnitts angeordnet ist. Der runde Abschnitt ist auf dessen Rückseite mittels eines ringförmigen Kugellagers 22 drehbar mit dem Tragrahmen 3 verbunden. Dies wird aus der weiter unten beschriebenen Fig. 4 näher ersichtlich. Der Kühlkörper 11 ist auf der Rückseite fest mit einem Zahnradbauteil 12 verschraubt. Zwischen dem äußeren Umfangsrand des Zahnradbauteils 12 und der Rückseite des Kugellagers 22 befindet sich der innere kreisförmige Rand eines Einpressbauteils13, das mit dem Tragrahmen 3 verschraubt ist. Durch das Einpressbauteil wird die Leuchteinheit 2 samt dem Kugellager 22 im Tragrahmen 3 gehalten.

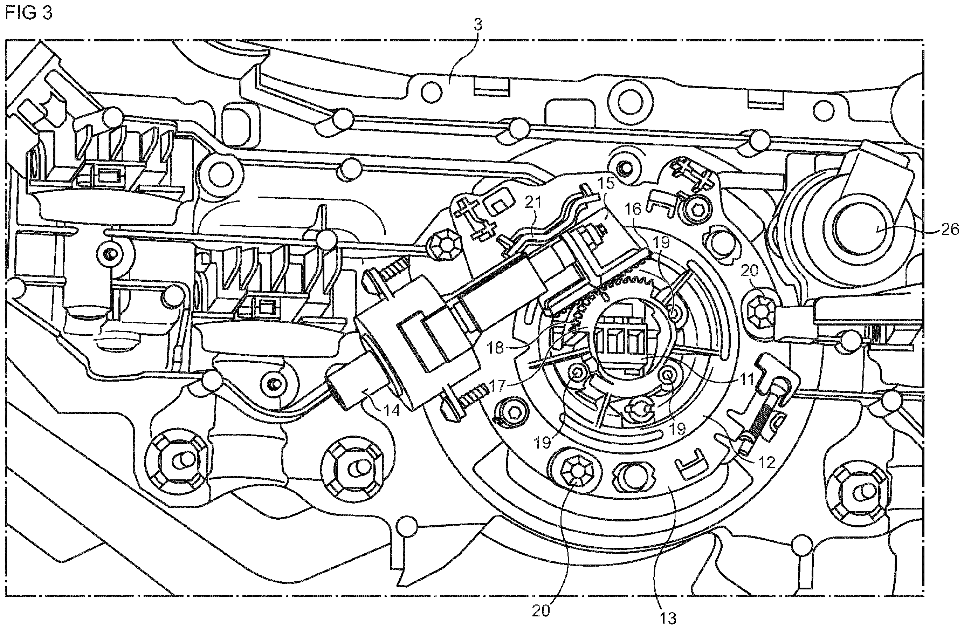

Fig. 3 zeigt eine Ansicht von hinten auf die Leuchteinheit 2 aus Fig. 2. Man erkennt aus dieser Figur, dass das Zahnradbauteil 12 über Schrauben 19 mit dem Kühlkörper 11 verschraubt ist. Das Zahnradbauteil 12 weist ferner eine zentrale Öffnung auf, über welche ein Teil des Kühlkörpers 11 ersichtlich wird. An der zentralen Öffnung befindet sich ein Zahnradsegment 17 mit einer Vielzahl von Zähnen 18. Das Zahnradsegment erstreckt sich über einen Winkelbereich von in etwa 90°. Aus Fig. 3 wird darüber hinaus ersichtlich, dass das Einpressbauteil 13 fest mit dem Tragrahmen 3 über Schrauben 20 verschraubt ist.

Zur Bewirkung eines Rollwinkelausgleichs, d.h. einer Verdrehung der Leuchteinheit 2 relativ zum restlichen Scheinwerfer um die Längsachse des Motorrads, wird eine einfache Mechanik unter Verwendung eines elektromechanischen Aktors 14 genutzt. Der elektromechanische Aktor umfasst dabei eine Zahnstange 15, die bei Aktivierung des Aktors 14 in deren Längsrichtung verschiebbar ist. Die Zahnstange weist auf ihrer Unterseite eine Vielzahl von Zähnen 16 auf, die in die Zähne 18 des Zahnradsegments 17 eingreifen. Bis auf die Verwendung der Zahnstange ist der Aufbau des elektromechanischen Aktors an sich bekannt. Insbesondere kann ein Aktor genutzt werden, der in anderen Fahrzeugen zur Leuchtweitenregulierung eingesetzt wird. Um ferner sicherzustellen, dass die Zahnstange 15 fest gegen das Zahnradsegment 17 drückt, ist auf der Rückseite des Einpressbauteils 13 ein gebogenes Element 21 ausgebildet, welches als Widerlager für die Zahnstange dient und eine Druckkraft auf diese ausübt, so dass eine Kraftübertragung zwischen den Zähnen 16 der Zahnstange 15 und den Zähnen 18 des Zahnradsegments 17 stattfindet.

Durch die Betätigung des elektromechanischen Aktors 14 wird die Zahnstange 15 verschoben und eine translatorische Bewegung über den Eingriff der Zähne 16 in die Zähne 18 in eine rotatorische Bewegung des Zahnradbauteils 17 und somit der gesamten Leuchteinheit 2 gewandelt. Der elektromechanische Aktor wird dabei im Betrieb des Motorrads derart angesteuert, dass automatisch ein Rollwinkelausgleich erreicht wird, d.h. der Aktor bewirkt eine Verdrehung der Leuchteinheit entgegen der Schräglage des Motorrads, so dass der Verlauf der Hell-Dunkel-Grenze der Abblendlichtverteilung unverändert bleibt.

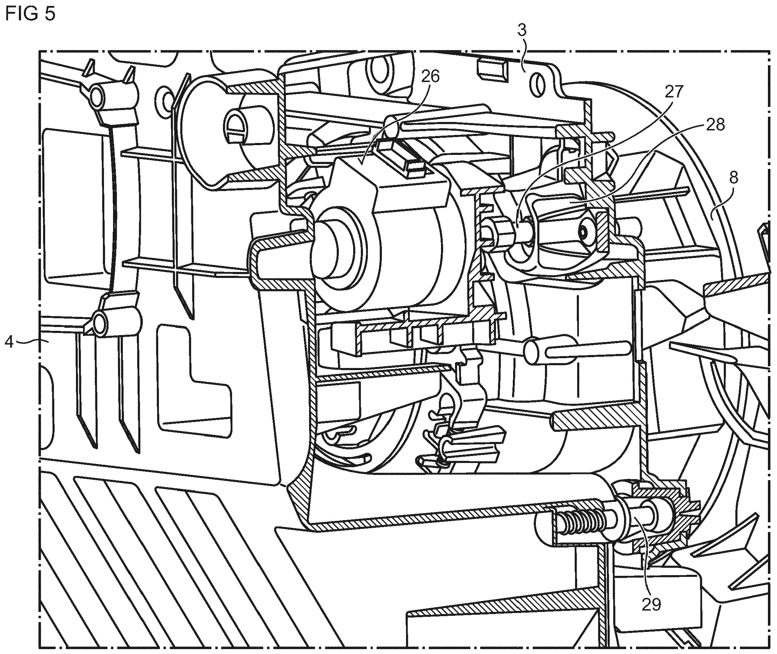

Aus Fig. 3 ist ferner im rechten Teil die Rückseite eines weiteren elektromechanischen Aktors 26 ersichtlich, der einen Nickwinkelausgleich bewirkt, wie weiter unten anhand von Fig. 5 erläutert wird.

Fig. 4 zeigt nochmals in geschnittener Detailansicht die Wechselwirkung zwischen der Zahnstange 15 und dem Zahnradsegment 17. Darüber hinaus erkennt man nochmals den Aufbau des ringförmigen Kugellagers 22. Das Kugellager umfasst einen Innenring 23 und einen Außenring 24, zwischen dem sich die Kugeln 25 befinden. Der Innenring 23 wird über das Zahnradbauteil 17 gegen den Kühlkörper 11 gedrückt und bewegt sich somit zusammen mit dem Zahnradbauteil und dem Kühlkörper. Demgegenüber wird der Außenring 24 über das Einpressbauteil 13 gegen den Tragrahmen 3 gedrückt, so dass der Außenring ortsfest im Tragrahmen gehalten wird.

Fig. 5 zeigt in schräger Ansicht von hinten den Aufbau des bereits oben erwähnten elektromechanischen Aktors 26. Dabei ist zusätzlich das auf der Rückseite des Scheinwerfers vorgesehene Gehäuse 4 ersichtlich. Der elektromechanische Aktor 26, dessen Antrieb genauso wie im Aktor 14 ausgestaltet sein kann, wird starr im Gehäuse 4 gehalten. Die Aktivierung des Aktors 26 bewirkt eine Verschiebung einer Stange 27, die sich in einer Aufnahme 28 am Tragrahmen 3 befindet und am vorderen Ende eine (nicht gezeigte) Kugel umfasst. Der Tragrahmen 3 ist ferner an vier Stellen über Kugelschrauben 29 verkippbar am Gehäuse 4 gelagert, wobei aus Fig. 5 lediglich eine Kugelschraube im Schnitt ersichtlich ist. Durch die Verschiebung der Stange 27 des Aktors 26 wird eine Verschwenkung des Tragrahmens 3 um eine horizontale Achse erreicht, die senkrecht zur Längsachse des Motorrads verläuft. Diese Verkippung ermöglicht eine Veränderung des Nickwinkels des Motorrads und somit eine Höhenverstellung der generierten Lichtverteilung. Wie oben erwähnt, sind in dem Tragrahmen 3 neben der Leuchteinheit 2, welche zur Generierung des Abblendlichts dient, vier weitere Leuchtmodule 5 zur Erzeugung des Fernlichts vorgesehen. Demzufolge bewirkt die Verkippung des Tragrahmens 3 eine Höhenverstellung sowohl des Abblendlichts als auch des Fernlichts.

Die im Vorangegangenen beschriebene Ausführungsform der Erfindung weist eine Reihe von Vorteilen auf. Insbesondere wird ein Motorradscheinwerfer mit einem einfachen mechanischen Aufbau zur Bewirkung eines Rollwinkelausgleichs mit einem großen Drehwinkelbereich (in etwa ± 35°) geschaffen. Die Mechanik beruht dabei auf der Wandlung einer translatorischen Bewegung in eine Drehbewegung durch Wechselwirkung einer Zahnstange mit einem Zahnrad. Durch diese einfache Mechanik wird eine kompakte Bauart des Scheinwerfers ermöglicht. Darüber hinaus können mehrere Bauteile des Scheinwerfers nach Art eines Baukastens in unterschiedlichen Scheinwerfertypen wiederverwendet werden.

### Bezugszeichen

- 1: Scheinwerfer
- 2: Leuchteinheit
- 3: Tragrahmen
- 4: Gehäuse
- 5: Leuchtmodule
- 6: Lichtwellenleiter
- 7: Reflektor
- 8: Blende
- 9: Kabel
- 10: LED-Platine
- 11: Kühlkörper
- 12: Zahnradbauteil
- 13: Einpressbauteil
- 14: elektromechanischer Aktor
- 15: Zahnstange
- 16: Zähn e der Zahnstange
- 17: Zahnradsegment
- 18: Zähne des Zahnradsegments
- 19, 20: Schrauben
- 21: gebogenes Element
- 22: ringförmiges Kugellager
- 23: innerer Ring des Kugellagers
- 24: äußerer Ring des Kugellagers
- 25: Kugel des Kugellagers
- 26: weiterer elektromechanischer Aktor
- 27: verschiebbare Stange des weiteren elektromechanischen Aktors
- 28: Aufnahme
- 29: Kugelschraube

## Patentansprüche

1. Scheinwerfer für ein Motorrad, umfassend
- eine Leuchteinheit (2) mit einem Leuchtmittel (10) und einer optischen Einrichtung (7), um mittels der optischen Einrichtung (7) aus dem Licht des Leuchtmittels (10) eine vorgegebene Lichtverteilung vor dem Motorrad zu generieren, wobei die Leuchteinheit (2) an einem Tragrahmen (3) befestigt ist und relativ zu dem Tragrahmen (3) derart drehbar ist, dass durch die Drehung der Leuchteinheit (2) die Verschwenkung der vorgegebenen Lichtverteilung in einer Ebene bewirkt wird, welche im Wesentlichen senkrecht zur Fahrtrichtung des Motorrads verläuft;
- einen elektromechanischen Aktor (14), um die Drehung der Leuchteinheit (2) zur Verschwenkung der vorgegebenen Lichtverteilung zu bewirken, wobei der elektromechanische Aktor (14) eine Zahnstange (15) umfasst, welche durch Aktivierung des Aktors (14) verschiebbar ist;
**dadurch gekennzeichnet, dass**
die Zahnstange (15) in ein Zahnradsegment (17) der Leuchteinheit (2) eingreift, so dass die Verschiebung der Zahnstange (15) die Drehung der Leuchteinheit (2) zur Verschwenkung der vorgegebenen Lichtverteilung bewirkt.

2. Scheinwerfer nach Anspruch 1, **dadurch gekennzeichnet, dass** der elektromechanische Aktor (14) über eine Steuereinrichtung derart ansteuerbar ist, dass der elektromechanische Aktor (14) bei einer Schräglage des Motorrads während der Fahrt die Leuchteinheit (2) entgegengesetzt zur Richtung der Schräglage verdreht.

3. Scheinwerfer nach Anspruch 1 oder 2, **dadurch gekennzeichnet, dass** die Leuchteinheit (2) mittels eines Lagers (22), vorzugsweise eines Kugel- und/oder Wälzlagers, drehbar im Tragrahmen (3) gelagert ist.

4. Scheinwerfer nach einem der vorhergehenden Ansprüche, **dadurch gekennzeichnet, dass** die Leuchteinheit (2) einen Kühlkörper (11) aufweist, auf dem das Leuchtmittel (10) angeordnet ist, wobei der Kühlkörper (11) starr mit einem Zahnradbauteil (12) verbunden ist, welches das Zahnradsegment (17) aufweist, oder wobei das Zahnradsegment (17) integral mit dem Kühlkörper (11) ausgebildet ist.

5. Scheinwerfer nach einem der vorhergehenden Ansprüche, **dadurch gekennzeichnet, dass** der elektromechanische Aktor (14) benachbart zu einem Bauteil (13) angeordnet ist, welches ein Widerlager (21) aufweist, das die Zahnstange (15) des elektromechanischen Aktors (14) gegen das Zahnradsegment (17) drückt.

6. Scheinwerfer nach Anspruch 5, **dadurch gekennzeichnet, dass** das Bauteil (13) starr mit dem Tragrahmen (3) verbunden ist und die Leuchteinheit (2) im Tragrahmen (3) hält.

7. Scheinwerfer nach einem der vorhergehenden Ansprüche, **dadurch gekennzeichnet, dass** die optische Einrichtung (7) einen Reflektor umfasst, wobei der Reflektor vorzugsweise ein Freiformreflektor ist, der durch Reflexion des Lichts des Leuchtmittels (10) direkt ohne Linse die vorgegebene Lichtverteilung vor dem Motorrad generiert.

8. Scheinwerfer nach einem der vorhergehenden Ansprüche, **dadurch gekennzeichnet, dass** das Leuchtmittel (10) eine oder mehrere LEDs und/oder Laserdioden umfasst.

9. Scheinwerfer nach einem der vorhergehenden Ansprüche, **dadurch gekennzeichnet, dass** die Leuchteinheit (2) zur Generierung einer Abblendlichtverteilung ausgebildet ist, wobei an dem Tragrahmen vorzugsweise eine oder mehrere weitere Leuchteinheiten (5) zur Generierung einer Fernlichtverteilung angeordnet sind.

10. Scheinwerfer nach einem der vorhergehenden Ansprüche, **dadurch gekennzeichnet, dass** der Scheinwerfer ein Gehäuse (4) umfasst, an dem der Tragrahmen (3) derart befestigt ist, dass er gegenüber dem Gehäuse (4) um eine Kippachse verkippbar ist, welche bei aufrechter Position des Motorrads im Wesentlichen horizontal und senkrecht zur Längsachse des Motorrads verläuft, wobei ein weiterer elektromechanischer Aktor (26) zur Verkippung des Tragrahmens (3) vorgesehen ist, um eine Höhenverstellung der vorgegebenen Lichtverteilung zu bewirken.

11. Scheinwerfer nach Anspruch 10, **dadurch gekennzeichnet, dass** der weitere elektromechanische Aktor (26) starr am Gehäuse (4) befestigt ist, wobei eine verschiebbare Betätigungsstange (27) des weiteren elektromechanischen Aktors (26) mit dem Tragrahmen (3) wechselwirkt, um die Verkippung des Tragrahmens (3) zu bewirken.

12. Motorrad, **dadurch gekennzeichnet, dass** das Motorrad einen Scheinwerfer nach einem der vorhergehenden Ansprüche umfasst.

## Claims

1. Headlight for a motorcycle, comprising
- a lighting unit (2) with a lamp (10) and an optical device (7) in order to generate by means of the optical device (7) a predetermined distribution of light in front of the motorcycle from the light of the lamp (10), wherein the lighting unit (2) is fastened to a supporting frame (3) and is rotatable relative to the supporting frame (3) in such a manner that the rotation of the lighting unit (2) causes the predetermined distribution of light to be pivoted in a plane which runs substantially perpendicularly to the direction of travel of the motorcycle;
- an electromechanical actuator (14) in order to bring about the rotation of the lighting unit (2) for pivoting the predetermined distribution of light, wherein the electromechanical actuator (14) comprises a rack (15) which is displaceable by activation of the actuator (14),
**characterized in that** the rack (15) engages in a gearwheel segment (17) of the lighting unit (2) such that the displacement of the rack (15) brings about the rotation of the lighting unit (2) for pivoting the predetermined distribution of light.

2. Headlight according to Claim 1, **characterized in that** the electromechanical actuator (14) can be activated by means of a control device in such a way that, if the motorcycle is in an inclined position during travel, the lighting unit (2) pivots oppositely to the direction of the inclined position.

3. Headlight according to Claim 1 or 2, **characterized in that** the lighting unit (2) is mounted rotatably in the supporting frame (3) by means of a bearing (22), preferably a ball bearing and/or rolling bearing.

4. Headlight according to one of the preceding claims, **characterized in that** the lighting unit (2) has a heat sink (11), on which the lamp (10) is arranged, wherein the heat sink (11) is rigidly connected to a gearwheel component (12), which has the gearwheel segment (17), or wherein the gearwheel segment (17) is formed integrally with the heat sink (11).

5. Headlight according to one of the preceding claims, **characterized in that** the electromechanical actuator (14) is arranged adjacent to a component (13) which has an abutment (21) which presses the rack (15) of the electromechanical actuator (14) against the gearwheel segment (17).

6. Headlight according to Claim 5, **characterized in that** the component (13) is rigidly connected to the supporting frame (3) and keeps the lighting unit (2) in the supporting frame (3).

7. Headlight according to one of the preceding claims, **characterized in that** the optical device (7) comprises a reflector, wherein the reflector is preferably a free-form reflector which generates the predetermined distribution of light in front of the motorcycle by reflection of the light of the lamp (10) directly without a lens.

8. Headlight according to one of the preceding claims, **characterized in that** the lamp (10) comprises one or more LEDs and/or laser diodes.

9. Headlight according to one of the preceding claims, **characterized in that** the lighting unit (2) is designed for generating a low-beam distribution of light, wherein one or more further lighting units (5) for generating a high- beam distribution of light are preferably arranged on the supporting frame.

10. Headlight according to one of the preceding claims, **characterized in that** the headlight comprises a housing (4), on which the supporting frame (3) is fastened in such a way that it can be tilted with respect to the housing (4) about a tilting axis which extends substantially horizontally and perpendicularly to the longitudinal axis of the motorcycle in the upright position of the motorcycle, wherein a further electromechanical actuator (26) is provided for the tilting of the supporting frame (3) in order to bring about a height adjustment of the predetermined distribution of light.

11. Headlight according to Claim 10, **characterized in that** the further electromechanical actuator (26) is rigidly fastened to the housing (4), wherein a displaceable actuating rod (27) of the further electromechanical actuator (26) interacts with the supporting frame (3) in order to bring about the tilting of the supporting frame (3).

12. Motorcycle, **characterized in that** the motorcycle comprises a headlight according to one of the preceding claims.

## Revendications

1. Phare pour une motocyclette, comprenant
- une unité d'éclairage (2) pourvue d'un moyen d'éclairage (10) et d'un dispositif optique (7) afin de générer au moyen du dispositif optique (7) une distribution de lumière prédéfinie devant la motocyclette à partir de la lumière du moyen d'éclairage (10), dans lequel l'unité d'éclairage (2) est fixée sur un cadre de support (3) et peut tourner par rapport au cadre de support (3) de telle sorte que la rotation de l'unité d'éclairage (2) provoque le pivotement de la distribution de lumière prédéfinie dans un plan qui s'étend de manière substantiellement perpendiculaire au sens de la marche de la motocyclette ;
- un actionneur électromécanique (14) pour provoquer la rotation de l'unité d'éclairage (2) en vue du pivotement de la distribution de lumière prédéfinie, l'actionneur électromécanique (14) comprenant une crémaillère (15) qui peut être déplacée par l'activation de l'actionneur (14) ;
**caractérisé en ce que** la crémaillère (15) vient en prise avec un segment de roue dentée (17) de l'unité d'éclairage (2) de sorte que le déplacement de la crémaillère (15) provoque la rotation de l'unité d'éclairage (2) en vue du pivotement de la distribution de lumière prédéfinie.

2. Phare selon la revendication 1, **caractérisé en ce que** l'actionneur électromécanique (14) peut être piloté par l'intermédiaire d'un dispositif de commande de telle sorte que dans une position inclinée de la motocyclette pendant le déplacement, l'actionneur électromécanique (14) fait tourner l'unité d'éclairage (2) à l'opposé de la direction de la position inclinée.

3. Phare selon la revendication 1 ou 2, **caractérisé en ce que** l'unité d'éclairage (2) est montée en rotation dans le cadre de support (3), au moyen d'un palier (22), de préférence d'un roulement à billes et/ou d'un palier à roulement.

4. Phare selon l'une quelconque des revendications précédentes, **caractérisé en ce que** l'unité d'éclairage (2) présente un dissipateur de chaleur (11) qui est disposé sur le moyen d'éclairage (10), dans lequel le dissipateur de chaleur (11) est relié rigidement à un composant de roue dentée (12) qui présente le segment de roue dentée (17), ou dans lequel le segment de roue dentée (17) est réalisé d'un seul tenant avec le dissipateur de chaleur (11).

5. Phare selon l'une quelconque des revendications précédentes, **caractérisé en ce que** l'actionneur électromécanique (14) est disposé de façon adjacente à un composant (13) qui présente un palier de butée (21) qui pousse la crémaillère (15) de l'actionneur électromécanique (14) contre le segment de roue dentée (17) .

6. Phare selon la revendication 5, **caractérisé en ce que** le composant (13) est relié rigidement au cadre de support (3) et maintient l'unité d'éclairage (2) dans le cadre de support (3).

7. Phare selon l'une quelconque des revendications précédentes, **caractérisé en ce que** le dispositif optique (7) comprend un réflecteur, le réflecteur étant de préférence un réflecteur de forme libre qui génère par réflexion de la lumière du moyen d'éclairage (10) directement sans lentille la distribution de lumière prédéfinie devant la motocyclette.

8. Phare selon l'une quelconque des revendications précédentes, **caractérisé en ce que** le moyen d'éclairage (10) comprend une ou plusieurs LED et/ou diodes laser.

9. Phare selon l'une quelconque des revendications précédentes, **caractérisé en ce que** l'unité d'éclairage (2) est réalisé pour générer une distribution de feu de croisement, dans lequel de préférence une ou plusieurs autres unités d'éclairage (5) sont disposées sur le cadre de support pour générer une distribution de feu de route.

10. Phare selon l'une quelconque des revendications précédentes, **caractérisé en ce que** le phare comprend un boîtier (4) auquel le cadre de support (3) est fixé de telle sorte qu'il est basculant par rapport au boîtier (4) autour d'un axe de basculement qui s'étend de manière substantiellement horizontale et verticale par rapport à l'axe longitudinal dans une position redressée de la motocyclette, dans lequel un autre actionneur électromécanique (26) est prévu pour le basculement du cadre de support (3) afin de provoquer un réglage de la hauteur de la distribution de lumière prédéfinie.

11. Phare selon la revendication 10, **caractérisé en ce que** l'autre actionneur électromécanique (26) est fixé rigidement au boîtier (4), dans lequel une tige d'actionnement mobile (27) de l'autre actionneur électromécanique (26) interagit avec le cadre de support (3) afin de provoquer le basculement du cadre de support (3).

12. Motocyclette, **caractérisée en ce que** la motocyclette comprend un phare selon l'une quelconque des revendications précédentes.
